(19) Europäisches Patentamt
European Patent Office
Office européen des brevets

(11) **EP 1 673 769 B1**

(12) **EUROPEAN PATENT SPECIFICATION**

(45) Date of publication and mention
of the grant of the patent:
**11.04.2007 Bulletin 2007/15**

(51) Int Cl.:
***G11B 7/24*** *(2006.01)*

(21) Application number: **04770185.9**

(22) Date of filing: **06.10.2004**

(86) International application number:
**PCT/IB2004/051994**

(87) International publication number:
**WO 2005/036536 (21.04.2005 Gazette 2005/16)**

(54) **DUAL-STACK OPTICAL DATA STORAGE MEDIUM FOR WRITE ONCE RECORDING**

OPTISCHES DOPPELSTAPEL-DATENSPEICHERMEDIUM ZUR EINMALBESCHREIBBAREN AUFZEICHNUNG

SUPPORT OPTIQUE BICOUCHE A ECRITURE UNIQUE

(84) Designated Contracting States:
**AT BE BG CH CY CZ DE DK EE ES FI FR GB GR HU IE IT LI LU MC NL PL PT RO SE SI SK TR**

(30) Priority: **09.10.2003 EP 03103741**

(43) Date of publication of application:
**28.06.2006 Bulletin 2006/26**

(73) Proprietor: **Koninklijke Philips Electronics N.V.**
**5621 BA Eindhoven (NL)**

(72) Inventors:
• **MARTENS, Hubert, C., F.**
**NL-5656 AA Eindhoven (NL)**
• **TIEKE, Benno**
**NL-5656 AA Eindhoven (NL)**
• **WOERLEE, Pierre, H.**
**NL-5656 AA Eindhoven (NL)**
• **VAN DEN OETELAAR, Ronald, J., A.**
**NL-5656 AA Eindhoven (NL)**
• **KOPPERS, Wilhelmus, R.**
**NL-5656 AA Eindhoven (NL)**

(74) Representative: **van Liempd, Jan Philips**
**Intellectual Property & Standards**
**P.O. Box 220**
**5600 AE Eindhoven (NL)**

(56) References cited:
**US-A- 5 666 344          US-A- 5 726 970**

• **PATENT ABSTRACTS OF JAPAN vol. 1999, no. 08, 30 June 1999 (1999-06-30) & JP 11 066622 A (TAIYO YUDEN CO LTD), 9 March 1999 (1999-03-09) cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a dual-stack optical data storage medium for write-once recording using a focused radiation beam having a wavelength $\lambda$ of approximately 655 nm and entering through an entrance face of the medium during recording, comprising:

- at least one substrate with present on a side thereof:
- a first recording stack, named L0, comprising a write-once type L0 recording layer, said first recording stack L0 having an optical reflection value $R_{L0}$ and an optical transmission value $T_{L0}$,
- a second recording stack, named L1, comprising a write-once type L1 recording layer, said second recording stack L1 having an effective optical reflection value $R_{L1eff}$,
  said first recording stack being present at a position closer to the entrance face than the second recording stack,
- a transparent spacer layer sandwiched between the recording stacks.

An embodiment of an optical recording medium as described in the opening paragraph is known from Japanese Patent Application JP-11066622.

Recently the Digital Versatile Disk (DVD) has gained market share as a medium with a much higher data storage capacity than the CD. This format is available in a read only (ROM), recordable (R) and a rewritable (RW) version. For recordable and rewritable DVD, there are at present several competing formats: DVD+R, DVD-R for recordable and DVD+RW, DVD-RW, DVD-RAM for rewritable. An issue for both the recordable and rewritable DVD formats is the limited capacity and therefore recording time because only single-stacked media are present with a maximum capacity of 4.7 GB. Note that for DVD-Video, which is a ROM disk, dual layer media with 8.5 GB capacity, often referred to as DVD-9, already have a considerable market share. Consequently, recordable and rewritable DVD's with 8.5GB capacity are highly desired.

One of the most important concerns for DVD+RW and DVD+R is to obtain backwards compatibility with existing DVD-ROM/DVD-video players. It is expected that dual-layer DVD+R, which is currently being developed, can achieve high compatibility with existing dual-layer DVD-ROM media; an effective reflection from both layers above 18 % and signal modulation of 60 % as demanded by DVD-ROM-DL, has been demonstrated in experiments. Note that the wordings "dual-layer" and "dual-stack" are often used interchangeably. In fact when dual-layer is written actually dual-stack is meant. The same holds for the expressions "single-stack" and "single-layer".

In order to obtain a dual-stack recordable DVD medium which is compatible with the dual-layer (=dual-stack) DVD-ROM standard, the effective reflectivity of both the upper L0 layer and the lower L1 layer should be at least 18%, i.e. the minimum effective optical reflection level in order to meet the specification is $R_{min} = 0.18$. Effective optical reflection means that the reflection is measured as the portion of effective light coming back from the medium when e.g. both stacks L0 and L1 are present and focusing on L0 and L1 respectively. The minimum reflection $R_{min} = 0.18$ is a requirement of the DVD-ROM dual layer (DL) standard.

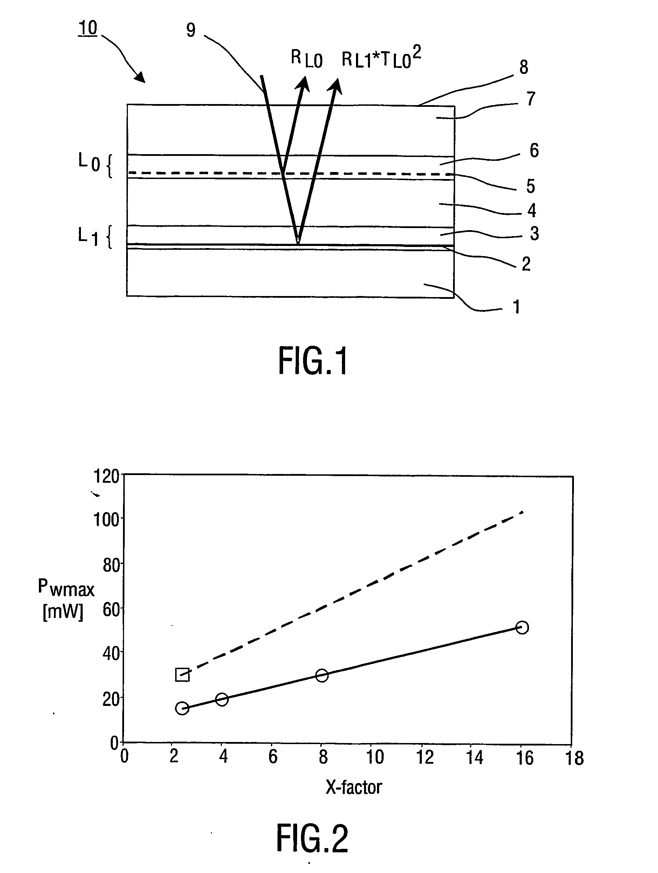

It can be expected that, similar to single-stack media, recording speed will become a very important issue for DL-media as well. Especially, since the doubled capacity implies doubled waiting time for consumers before a complete disc is recorded. Thus, a future speed-race for DL-media may be even more important than it is now for single layer (SL) media. A recurrent issue in the speed-race is the required write-power. For dye based write-once discs, there is a nearly linear relationship between recording speed and required laser power. Therefore, the maximum speed is limited by the capabilities of existing (or future) laser diodes. Obviously, the starting point for a future DL speed-race is quite unfavorable when the currently developed 2.4X media already require very high write power. As a benchmark for available power budget we can take a current 4X drive that has 30 mW maximum output power and the future 8X drive, which is expected to have over 40 mW maximum power. To allow some margins, e.g. heating in drive, variations in media, wavelength-dependent sensitivity variation, etc., the nominal write power for 4X and 8X single-layer media should be considerably below this value, i.e.<15 mW for 2.4X, < 19 mW for 4X and < 30 mW for 8X. Note that, due to mechanical limitations, the speed-race for DVD will be limited to 16X recording for which the estimated write power is 50 mW. Empirically, the dependency of single-layer DVD+R write power on recording speed X-factor is given by $P_{SL}(X) = 2.73*X + 8.24$ (in mW), see Figure 2. Based on the current status of DVD+R-DL research, the write power at 2.4X recording speed is expected to fall in the range 25 mW - 35 mW (aim = 30 mW), i.e. the expected write power for 2.4X dual-layer DVD+R is twice as high as for single layer DVD+R: $P_{DL} = 2*P_{SL}$. It means that the starting point (from power point-of-view) of dual-layer DVD+R speed race is very unfavorable, see Figure 2.

The problem with DVD+R-DL is that there is nearly twice as much storage capacity but a limitation in available recording speed. For instance DVD+R single-layer is now recordable at 8X, while DVD+R-DL is limited to 2.4X. It would be very favorable for the acceptance of DVD+R-DL, if the DVD+R-DL can keep pace with the DVD+R single-layer speed-race. The current DVD+R-DL media are too unsensitive to keep up with this speed race due to laser power limitations.

It is an object of the invention to provide a dual stack optical data storage medium of the type mentioned in the opening paragraph which has an improved recording sensitivity.

This object is achieved with the optical data storage medium according to the invention which is characterized in that $0.12 \leq R_{L0} \leq 0.18$ and $0.12 \leq R_{L1eff} \leq 0.18$. The applicant has found that when the reflection parameters fall in this range a good compromise between signal strength of the read-out written information and recording layer sensitivity is achieved. These effective reflection ranges are acceptable to achieve read-out compatibility in a high percentage of existing DVD-players. Note that, at present, such a reflectivity range is not achievable in a rewritable (RW) dual-stack DVD based on e.g. phase-change technology.

Said higher sensitivity enables a higher writing speed without the need for higher laser powers. It is especially advantageous when $0.15 \leq R_{L0} \leq 0.18$ and $0.15 \leq R_{L1eff} \leq 0.18$. This range has the advantage that a medium fulfilling this condition will, with a high degree of probability, play in older DVD players because it is very close to the lower limit of the DVD-ROM DL specification. Clearly, in order to guarantee full compatibility with the existing dual-layer DVD-ROM media, a minimum reflection level of 18% is required. On the other hand, from the hardware point-of-view it seems that, in practice, much lower reflection levels can be handled by DVD-ROM drives and players. An initial playability test of "low"-reflection dual-layer DVD media shows that about 75% of a selection of currently available players is able to properly play back 13% reflection discs. As said, in the reflection range 15 -18 % this percentage is even higher. Furthermore, it can be expected that with improvements of e.g. optical pick-up units (OPU's) for DVD players, lower-reflection discs will be played back more easily in the near future.

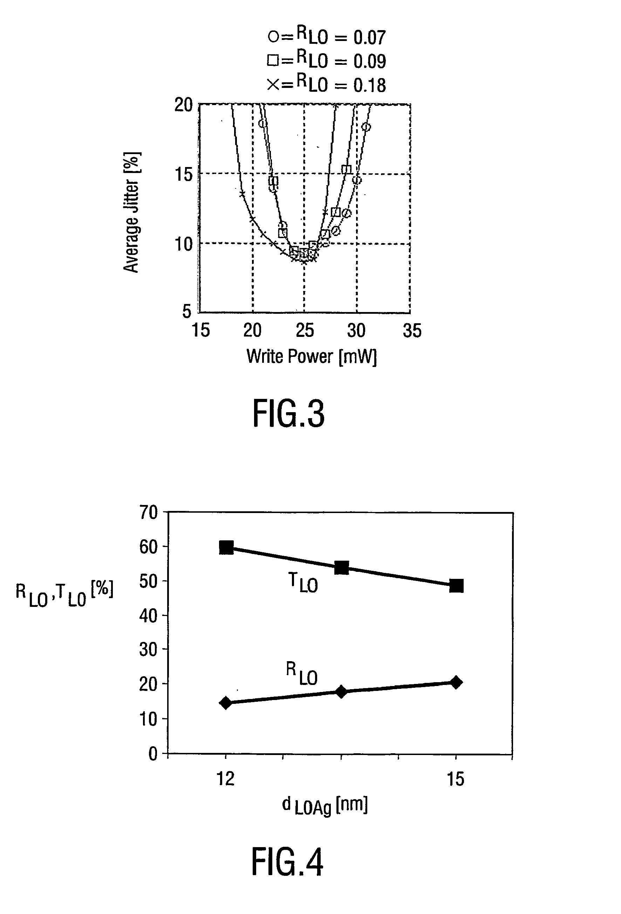

The reflection and transmission of L0 stacks is tuned mainly by variation of the thickness $d_{L0M}$ of the semi-transparent mirror, e.g. Ag or an Ag-alloy, and to a lesser extend by the absorptivity of the dye. E.g. for the case of Ag it turns out that, over the Ag thickness range of interest, the reflection and transmission depend approximately linearly on the Ag thickness; for the stack-design currently in use the following relations are found: $T_{L0}(d_{L0Ag}) = -3.7 \cdot d_{L0Ag} + 105$ (in %) and $R_{L0}(d_{L0Ag}) = 2 \cdot d_{L0Ag} - 8.8$ (in %), note that $d_{L0Ag}$ is measured in nanometers, see figure 4. The contribution of the first recording layer thickness (dye) to the total absorption of the L0 stack is rather small. Thus, reflection and transmission of L0 are to a large extent determined by the choice of Ag-alloy thickness. Unfortunately, the large fraction of incident laser power that is directly dissipated in the semitransparent mirror does not contribute to the recording of the dye layer: heat generated in the mirror does not flow in to the dye due to the very low heat conductivity of the latter and the very high heat conductivity of the former. It implies that over a large range of $R_{L0}$ (and $T_{L0}$) values, the required write power for L0 stays remarkably constant, see Fig. 3.

A high reflection of L1 can only be achieved in combination with a high transmission of L0, because the effective L1 reflection depends quadratically on $T_{L0}$: $R_{L1eff} = R_{L1} \cdot T_{L0}^2$. It is advantageous when $R_{L0}$ is substantially equal to $R_{L1eff}$. In this way a balanced reflection is seen from both stacks of the medium by a read out radiation beam of an optical drive. Preferably the effective reflections of L0 and L1 are equal, i.e. $R_{L1eff} = R_{L0}$, and hence the maximum allowed absorption in L1 is limited to $A_{L1max} = 1 - R_{L0}/T_{L0}^2$. In reality $A_{L1max}$ will be lower because the reflection of L1 is also influenced by diffraction effects. The write power for L1 in a dual-layer disc will be proportional to $(A_{L1} \cdot T_{L0})^{-1}$. With this in mind it is possible to estimate the dependence of L1 write power on the effective reflection level $R_{eff}$ of the dual-layer disc, given that for $R_{L1eff} = 18\%$ the write power $P_{L1}$, eff = 30 mW.

When using the experimental relation for $T_{L0}$ and $R_{L0}$ given above, a balanced effective reflection of L0 and L1, and assuming that $A_{L1} = 1 - R_{L1}$, it is found that at an effective reflection of 12%, the required write power for L1 could be halved, i.e. of the same magnitude as for single-layer media! It is noted that the sensitivity of L0 can be improved by using a dye with larger absorption value k. Calculations show that the increasing sensitivity of L0 implies that a transmission of about 60% can be achieved in practice.

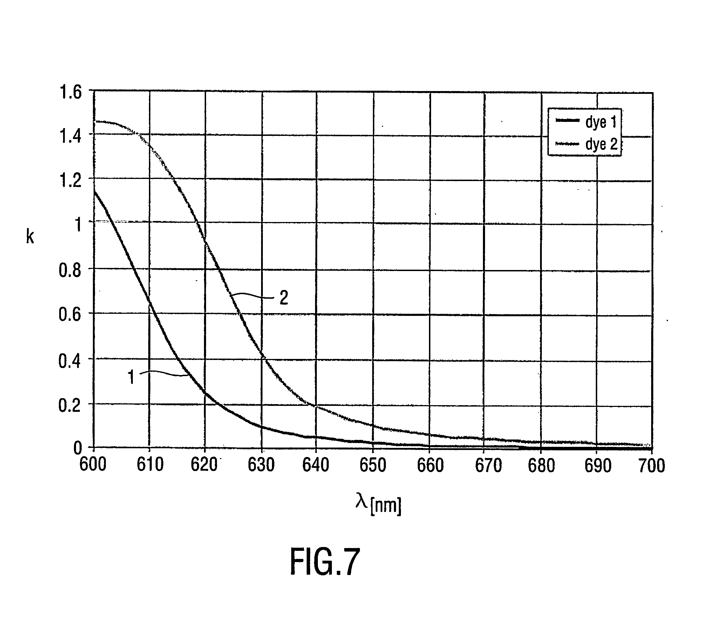

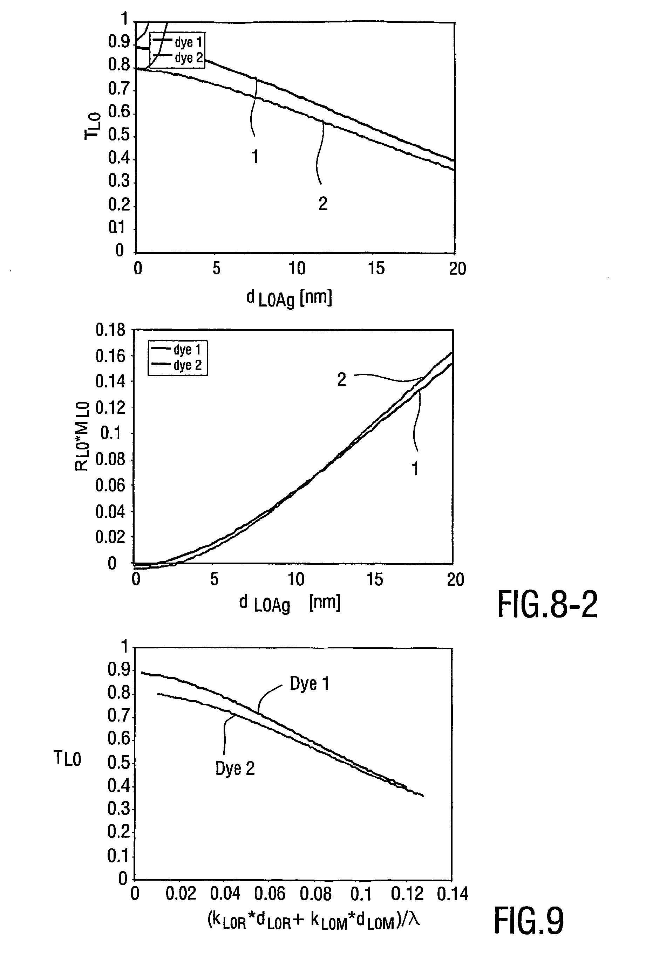

A $T_{L0}$ of 60 % or more can be achieved when the first recording stack comprises a first reflective layer with a thickness $d_{L0M}$ and an absorption coefficient $k_{L0M}$ and the L0 recording layer has an absorption coefficient $k_{L0R}$ and a thickness $d_{L0R}$ and where $(k_{L0R} \cdot d_{L0R} + k_{L0M} \cdot d_{L0M}) < 0.08 \cdot \lambda$. This can be deduced from Fig. 9 in which figure $T_{L0}$ is calculated for two different dyes dye 1 and dye 2. For these two dyes the k as a function of the wavelength is shown in Fig. 7.

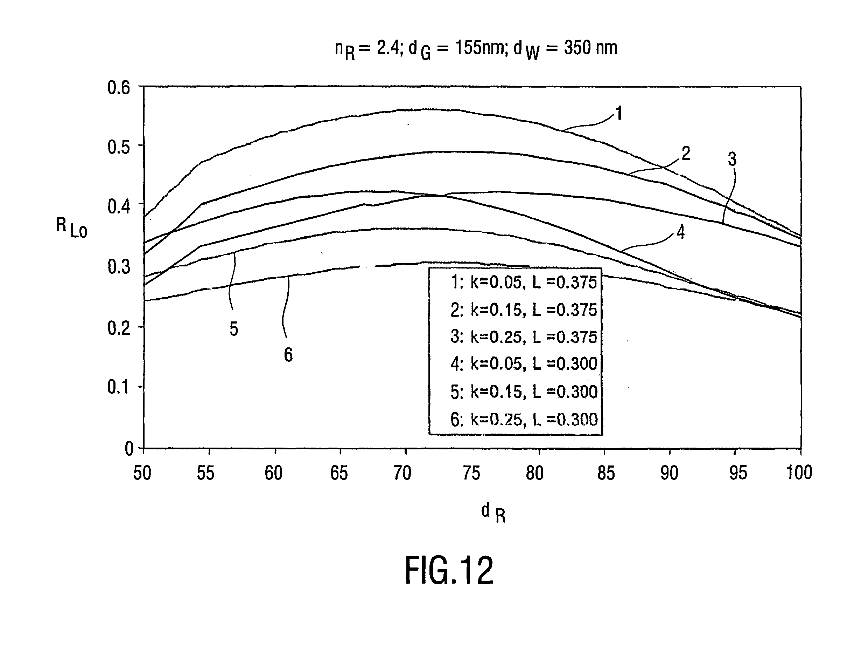

In order to balance the effective reflection and sensitivity of the two layers, it is favorable when the second recording stack comprises a second reflective layer and the L1 recording layer has an absorption coefficient $K_{L1R}$ and where the intrinsic reflection $R_{L1}$ of the second recording stack is in the range 0.30 - 0.60 and where $0.075 < k_{L1R} < 0.25$. The relation between reflection and dye thickness is further illustrated in Fig. 12 for k values of 0.05, 0.15 and 0.25, respectively, assuming two different leveling parameters (L=0.375, L=0.3). The leveling parameter L is defined as $(d_{dyegroove} - d_{dyeland})/d_G$ in which formula $d_{dyegroove}$ is the recording layer (dye) thickness in the groove (= $d_R$), $d_{dyeland}$ is the recording layer (dye) thickness on land and $d_G$ is the depth of the pregroove. For the L 1 stack of the dual-stack optical data storage medium according to the invention a second reflective layer is present at a side of the write-once type L 1 recording layer most remote from the entrance face. In an embodiment the second reflective layer is metallic and has a thickness $d_{L1M} \geq 25$ nm and preferably the thickness of the dye layer $d_{L1R}$ is in the range of $0 < d_{L1R} \leq 3\lambda/4n_{L1R}$. The latter range is the range of a conventional single stack write once medium. When $d_{L1M}$ is lower than 25 nm the reflectivity may become too low. The lower L1 stack of a recordable dual-stack DVD medium should have high reflectivity at the radiation beam wavelength in order to be able to read back recorded data through the above L0 stack.

In an embodiment the first reflective layer has a thickness $d_{L0M} \leq 16$ nm, preferably $d_{L0M} \leq 12$ nm and mainly comprises one selected from Ag, Au or Cu. For this stack, a relatively thin first reflective layer is placed between the dye and the spacer. The first reflective layer serves as a semi-transparent layer to increase the reflectivity. A maximum thickness and suitable material must be specified to keep the transmission of the first metal reflective layer sufficiently high. For the metal layer e.g. Ag, Au, Cu, and also Al, or alloys of all thereof, or doped with other elements, can be used. In order to obtain a sufficiently transparent stack, the preferred thickness of the first reflective layer is as specified above.

Preferably $k_{L0R} > 0.025$, more preferably > 0.050. By increasing the k of the L0 recording layer a higher sensitivity may be achieved. The contribution of the first recording layer thickness (dye) to the total absorption of the L0 stack is rather small. Thus, reflection and transmission of L0 are to a large extent determined by the choice of Ag(-alloy) thickness. Therefore, using a dye with a higher absorption will increase the sensitivity of the L0 recording stack, with little adverse effects on the transmission and reflection.

The present invention can be applied to all dual layer DVD recordable (R) formats. The dye material of the recording layers intrinsically has a high transmission at the recording wavelength $\lambda$. Typical dyes that can be used are cyanine-type, azo-type, squarylium-type, or other organic dye material having the desired properties.

In the dual stack optical data storage medium guide grooves for guiding the radiation beam may be present in both the L0 and the L1 stack. A guide groove for the L0 stack is normally provided in the substrate closest to the entrance face.

In an embodiment a guide groove (G) for L1 is provided in the transparent spacer layer. This embodiment is called type 1.

In another embodiment a guide groove (G) for L1 is provided in the substrate. This embodiment is called type 2.

The invention will be elucidated in greater detail with reference to the accompanying drawings, in which:

Fig. 1 shows a schematic layout of an embodiment of the optical data storage medium according to the invention including the two stacks L0 and L1;

Fig. 2 shows the dependence of write power on recording speed for single layer DVD+R (circles) and dual-layer DVD+R (square) and estimated dependence for dual-layer DVD+R at 18 % reflection level (dashed line).

Fig. 3 shows jitter versus write power for L0 stacks having different reflection. Circles: 7 % reflection, Squares: 9 % reflection, Crosses: 18 % reflection..

Fig. 4 shows the dependence of L0 transmission (squares) and L0 reflection (checkers) on Ag-alloy thickness for a specific stack design, i.e. groove depth = 140 nm, groove width = 300 nm, dye thickness in groove = 80 nm, 1X AZO-dye;

Fig. 5 shows the theoretical write power dependence of L1 on effective reflection of L0 and L1;

Fig. 6 shows the playability of dual-layer DVD media having reduced reflection level on existing DVD players;

Fig. 7 shows the absorption coefficient k as a function of $\lambda$ for two dyes used in DVD+R (DL);

Figs. 8-1 and 8-2 show the calculated reflection ($R_{LO}$), modulation ($M_{LO}$), transmission ($T_{LO}$), and modulation x reflection ($R_{LO} * M_{LO}$) product for a L0 stack as function of Ag thickness;

Fig. 9 shows the transmission $T_{L0}$ through L0 as function of $(k_{L0R} * d_{L0R} + k_{L0M} * d_{L0M})/\lambda$;

Fig. 10 shows a type 1 optical data storage medium;

Fig. 11 shows a type 2 optical data storage medium.

Fig. 12 shows the intrinsic L1 reflection, $R_{L1}$, as a function of dye thickness for k values of 0.05, 0.15 and 0.25, respectively, assuming two different leveling parameters (L=0.375, L=0.3).

In Fig 1 a dual-stack optical data storage medium 10 for recording using a focused radiation beam 9, e.g. a laser beam, having a wavelength 655 nm is shown. The laser beam 9 enters through an entrance face 8 of the medium 10 during recording. The medium 10 comprises a substrate 7 with present on a side thereof a first recording stack 6 named L0, comprising a write-once type L0 recording layer 5 having a complex refractive index $\tilde{n}_{L0} = n_{L0} - i.k_{L0}$ and having a thickness $d_{L0}$. The first recording stack L0 has an optical reflection value $R_{L0}$ and an optical transmission value $T_{L0}$. A second recording stack 3 named L1 comprising a write-once type L1 recording layer having a complex refractive index $\tilde{n}_{L1} = n_{L1} - i.k_{L1}$ and having a thickness $d_{L1R}$ is present. The second recording stack L 1 has an optical reflection value $R_{L1}$. The optical parameters are all measured at the laser beam wavelength. The first recording stack 6 is present at a position closer to the entrance face 8 than the second recording stack 3. A transparent spacer layer 4 is sandwiched between the recording stacks 3 and 6. The transparent spacer layer 4 has a thickness substantially larger than the depth of focus of the focused radiation beam 9. The stacks are tuned such as to meet the following requirements $0.12 \leq R_{L0} \leq 0.18$ and $0.12 \leq R_{L1eff} \leq 0.18$, in which $R_{L1eff}$ is the effective reflection from recording stack 3 at the entrance face 8, after double passing through recording stack 6 Preferably, $R_{L0}$ is substantially equal to $R_{L1eff}$.

A more detailed description:

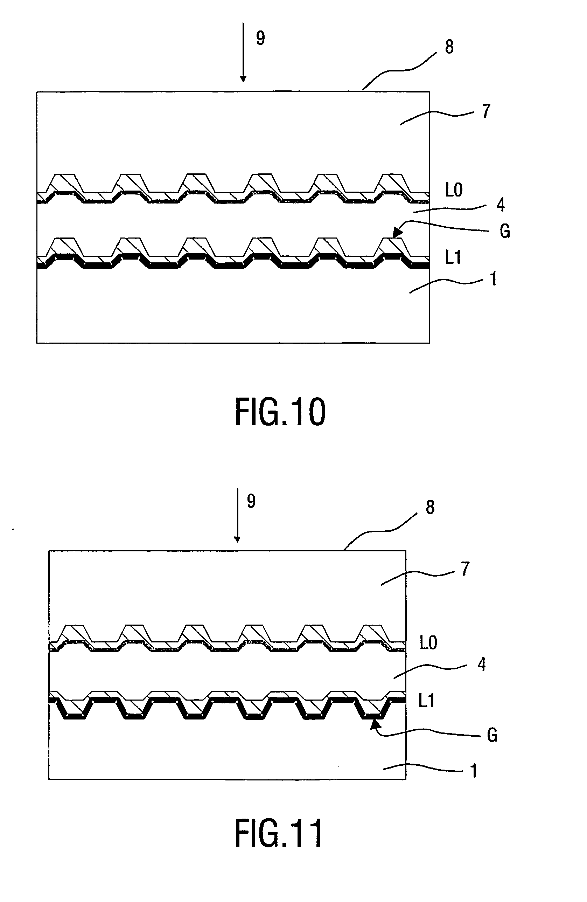

Medium of type 1 (see Fig 10), with L0 stack: 80 nm azo-dye in groove /12 nm Ag-alloy and L 1 stack: 100 nm azo-dye/ 120 nm Ag-alloy. The transparent spacer 4 has a thickness of 55 $\mu$m. Optical reflection $R_{L0}$ of L0 is 15 %, transmission $T_{L0}$ of L0 is 61 %, effective reflection $R_{L1eff}$ (through L0) of L1 is 15 %. By using dyes as recording layer, which dyes are relatively transparent at the laser recording wavelength, recording stacks with high transmission suitable for multi-stack media can be fabricated. This is typically the case in write-once optical media such as CD-R and DVD+R. The L0 stack has a guide groove with a depth of 145 nm and a width of 325 nm (FWHM). The L1 stack has a guide groove G with a depth of 170 nm and a width of 370 nm (FWHM). The guide groove G is provided in the transparent spacer layer 4.

The L0 recording layer is a 80 nm thick azo-dye having a refractive index $\tilde{n}_{L0}$ = 2.45 - i.0.08. The wavelength $\lambda$, of the focused laser beam 9 is approximately 655nm. $(k_{L0R}* d_{L0R} + k_{L0M}* d_{L0M})$ / $\lambda$ = (0.08*80 + 3.75*12) / 655 = 0.078, which is indeed smaller than 0.08.

Similar reflection values may be obtained using Au, Cu or alloys of these metals as reflective layer material.

In Fig. 2 the dependence of maximum write power $P_{wmax}$ on recording speed for single layer DVD+R (circles) is shown as well as $P_{wmax}$ for dual-layer DVD+R (square) at 2.4 X and the estimated dependence for dual-layer DVD+R (dashed line) at 18 % reflection level. It is clear that a relatively high write power $P_w$ is required for such a dual stack (18% reflection) write once recording medium at higher recording speeds, i.e. 4X (14 m/s) or higher. At 8X speed 60 mW is required which is more than what is available at this moment in consumer recorders and drives. Hence it is clear that there is a need for a more sensitive dual-layer DVD+R medium.

In Fig. 3 the average jitter versus write power for L0 stacks having different reflection is shown. The average jitter is a measure for the deviation of the position of written marks from their optimum position. The average jitter is minimal at optimum write power. Circles: 7 % reflection, Squares: 9 % reflection, Crosses: 18 % reflection. It is noticeable that over a large range of $R_{L0}$ values the optimum write power stays remarkably constant.

In Fig. 4 the dependence of L0 transmission $T_{L0}$ (squares) and L0 reflection $R_{L0}$ (checkers) on Ag thickness for a specific stack design, i.e. groove depth = 140 nm, groove width = 300 nm, dye thickness in groove = 80 nm and a 1X AZO-dye is shown. The reflection and transmission of L0 stacks is tuned mainly by variation of the thickness $d_{L0M}$ of the semitransparent mirror, e.g. Ag or a Ag-alloy, and to a lesser extend by the absorptivity k of the dye. E.g. for the case of Ag it turns out that, over the Ag-alloy thickness range of interest, the reflection and transmission depend approximately linearly on the Ag-alloy thickness; for the stack-design currently in use the following relations are found: $T_{L0}$ $(d_{L0Ag})$= -3.7*$d_{L0Ag}$ + 105 (in %) and $R_{L0}(d_{L0Ag})$ = 2* $d_{L0Ag}$ - 8.8 (in %), note that $d_{L0Ag}$ is measured in nanometers.

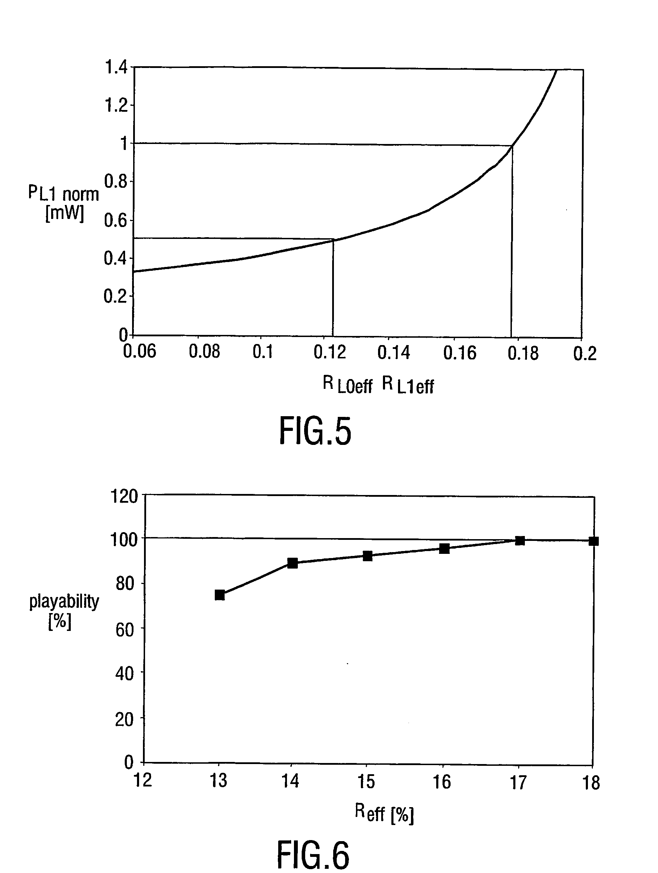

In Fig. 5 the theoretical dependence of write power of L1: $P_{L1norm}$ on effective reflection of L0 and L1 is shown. A high reflection of L1 can only be achieved in combination with a high transmission of L0, because the effective L1 reflection $R_{L1eff}$ depends quadratically on $T_{L0}$: $R_{L1eff} = R_{L1}*T_{L0}^2$. Because preferably the reflection of L0 and L1 is balanced, i.e. $R_{L1eff} = R_{L0}$, the maximum allowed absorption in L1 is limited to $A_{L1max}$ = 1- $R_{L0}/T_{L0}^2$. In reality $A_{L1max}$ will be lower because the reflection of L1 is also influenced by diffraction effects. $P_{L1norm}$ in a dual-layer disc will be proportional to $(A_{L1}*T_{L0})^{-1}$. With this in mind it is possible to estimate the dependence of L1 write power on the effective reflection level $R_{eff}$ of the dual-layer disc, given that for $R_{L1eff}$ = 18% the write power $P_{L1eff}$ = 30 mW.

When the experimental relations for $T_{L0}$ and $R_{L0}$ given above : $T_{L0}(d_{L0Ag})$ = - 3.7*$d_{L0Ag}$ + 105 (in %) and $R_{L0}$ $(d_{L0Ag})$ = 2* $d_{L0Ag}$ - 8.8 (in %), and the assumptions that $A_{L1}$ = 1- $R_{L1}$ and $R_{L0} = R_{L1eff}$ are used, it is found that at an effective reflection level $R_{L1eff}$ of 12%, the required optimal write power for the L 1 recording layer is halved, i.e. of the same magnitude as for single-layer media. It is noted that the sensitivity can of L0 can be improved by using a dye with larger absorption value k, with little adverse effects on the reflection and transmission of L0. Calculations show that a transmission of about 60% can be achieved in practice.

In Fig. 6 the playability of dual-layer DVD media having reduced reflection level on existing DVD players is shown. Playability is defined as the percentage of existing DVD players that will correctly read the data from the inserted medium.

In Fig. 7 the absorption coefficient k as a function of $\lambda$ for two dyes used in DVD+R (DL) is shown. Dye 2 has a larger absorption value k than dye 1.

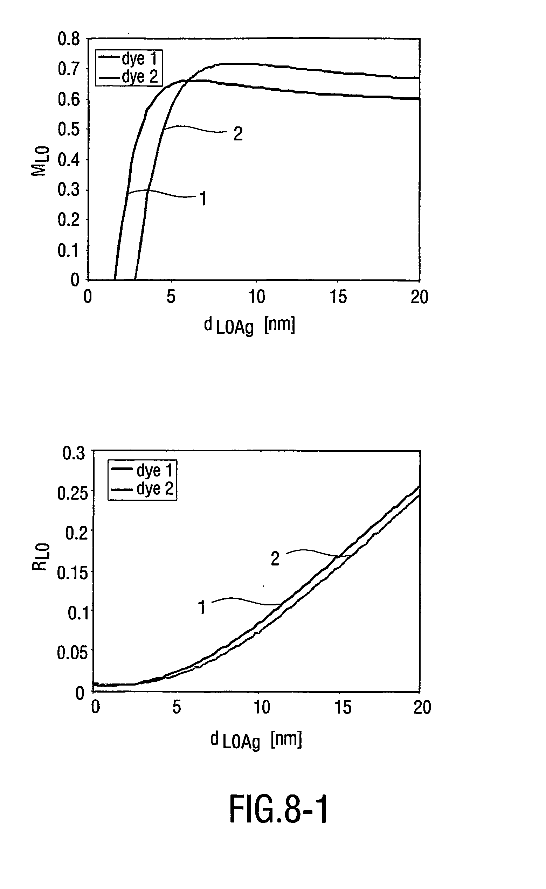

In Fig. 8 the calculated reflection, modulation, transmission, and modulation x reflection product for an L0 stack as function of Ag thickness are shown for dye 1 and dye 2.

In Fig. 9 the transmission $T_{L0}$ as a function of $(k_{L0R}* d_{L0R} + k_{L0M}* d_{L0M})/\lambda$ is shown. A $T_{L0}$ of more than 60 % can be achieved when $(k_{L0R}* d_{L0R} + k_{L0M}* d_{L0M})/\lambda$< 0.08.

In Fig. 10 a so-called type 1 medium is shown. An optical recording stack (L0), optically semi-transparent at the laser wavelength, is applied to a transparent, pre-grooved substrate 7. A transparent spacer layer 4 is attached to the L0 stack. The spacer layer 4 either contains pregrooves (G) for L1 or pregrooves (G) for L1 are mastered into the spacer layer 4 after application to L0. Second recording stack L1 is deposited on the grooved spacer layer 4. Finally, a counter substrate 1 is applied.

In Fig. 11 a so-called type 2 medium is shown. An optical recording stack (L0), optically semi-transparent at the laser wavelength, is applied to a transparent, pre-grooved substrate 7. A second optical recording stack L1, reflective at the laser wavelength, is applied to a second transparent pre-grooved (G) substrate 1. This substrate 1 with L1 is attached to the substrate 7 with L0 with a transparent spacer layer 4 in between. Preferred spacer-layer thickness for both disc types is 40 $\mu$m to 70 $\mu$m.

In Fig.12 the intrinsic L1 reflection, $R_{L1}$, as a function of dye thickness $d_R$ for k values of 0.05, 0.15 and 0.25, respectively, assuming two different leveling parameters (L=0.375, L=0.3) is shown.

The stacks proposed in this document are not restricted to use in DVD+R-DL and can be applied in any (multi-stack) organic-dye based optical recording medium. The thickness and optical constant ranges specified, however, are such as to meet the requirements for an L0- and L1-stack of a DVD+R-DL medium. It should be noted that the actual recording of marks does not necessarily take place in the groove G but may take place in the area between grooves, also referred to as on-land. In this case the guide groove G merely serves as a servo tracking means with the actual radiation beam recording spot being present on-land.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

## Claims

1. A dual-stack optical data storage medium (10) for write-once recording using a focused radiation beam (9) having a wavelength $\lambda$ of approximately 655 nm and entering through an entrance face (8) of the medium (10) during recording, comprising:

   - at least one substrate (1, 7) with present on a side thereof:
   - a first recording stack (6), named L0, comprising a write-once type L0 recording layer, said first recording stack L0 having an optical reflection value $R_{L0}$ and an optical transmission value $T_{L0}$,
   - a second recording stack (3), named L1, comprising a write-once type L1 recording layer, said second recording stack L1 having an effective optical reflection value $R_{L1eff}$,
   said first recording stack being present at a position closer to the entrance face than the second recording stack,
   - a transparent spacer layer (4) sandwiched between the recording stacks (3, 6),

   **characterized in that**
   $0.12 \leq R_{L0} \leq 0.18$ and $0.12 \leq R_{L1eff} \leq 0.18$.

2. A dual-stack optical data storage medium as claimed in claim 1, wherein $0.15 \leq R_{L0} \leq 0.18$ and $0.15 \leq R_{L1eff} \leq 0.18$.

3. A dual-stack optical data storage medium as claimed in any one of claims 1 or 2, wherein $R_{L0}$ is substantially equal to $R_{L1eff}$.

4. A dual-stack optical data storage medium as claimed in any one of claims 1, 2 or 3, wherein the first recording stack comprises a first reflective layer (5) with a thickness $d_{L0M}$ and an absorption coefficient $k_{L0M}$ and the L0 recording layer has an absorption coefficient $k_{L0R}$ and a thickness $d_{L0R}$ and where $(k_{L0R}{}^* d_{L0R} + k_{L0M}{}^* d_{L0M}) < 0.08*\lambda$.

5. A dual-stack optical data storage medium as claimed in any one of claims 1, 2, 3 or 4, wherein the second recording stack comprises a second reflective layer (2) and the L 1 recording layer has an absorption coefficient $k_{L1R}$ and where the intrinsic reflection $R_{L1}$ of the second recording stack is in the range 0.30 - 0.60 and where $0.075 < k_{L1R} < 0.25$.

6. A dual-stack optical data storage medium as claimed in any one of claims 4 or 5, wherein the first reflective layer (5) has a thickness $d_{L0M} \leq 16$ nm and mainly comprises one selected from Ag, Au or Cu.

7. A dual-stack optical data storage medium as claimed in claim 6, wherein the first reflective layer (5) has a thickness $d_{L0M} \leq 12$ nm.

8. A dual-stack optical data storage medium as claimed in any one of claims 1 - 7, wherein $k_{L0R} > 0.025$.

9. A dual-stack optical data storage medium as claimed in claim 8, wherein $k_{L0R} > 0.050$

**10.** A dual-stack optical data storage medium as claimed in any one of claims 1 to 9, wherein a guide groove (G) for L 1 is provided in the transparent spacer layer (4).

**11.** A dual stack optical data storage medium as claimed in any one of claims 1 to 9, wherein a guide groove (G) for L1 is provided in the substrate (1).

**Patentansprüche**

**1.** Optisches Doppelstapel-Datenspeichermedium (10) zur einmal beschreibbaren Aufzeichnung unter Verwendung eines fokussierten Strahlenbündels (9), das eine Wellenlänge λ von ungefähr 655 nm aufweist und während des Aufzeichnens durch eine Eintrittsfläche (8) des Mediums (10) eintritt, das Folgendes umfasst:

- mindestens ein Substrat (1, 7), wobei auf mindestens einer Seite davon Folgendes vorhanden ist:
- ein erster Aufzeichnungsstapel (6), genannt L0, der eine Aufzeichnungsschicht L0 eines einmal beschreibbaren Typs umfasst, wobei der erste Aufzeichnungsstapel L0 einen optischen Reflexionswert $R_{L0}$ und einen optischen Transmissionswert $T_{L0}$ aufweist,
- einen zweiten Aufzeichnungsstapel (3), genannt L1, der eine einmal beschreibbare Aufzeichnungsschicht des Typs L1 umfasst, wobei die zweite Aufzeichnungsschicht L1 einen effektiven optischen Reflexionswert $R_{L1eff}$ aufweist, wobei der erste Aufzeichnungsstapel an einer Position vorhanden ist, die näher an der Eintrittsfläche liegt als der zweite Aufzeichnungsstapel,
- eine transparente Abstandsschicht (4), die zwischen den Aufzeichnungsstapeln (3, 6) angeordnet ist, **dadurch gekennzeichnet, dass** $0.12 \leq R_{L0} \leq 0.18$ und $0.12 \leq R_{L1eff} \leq 0.18$.

**2.** Optisches Doppelstapel-Datenspeichermedium nach Anspruch 1, wobei $0.15 \leq R_{L0} \leq 0.18$ und $0.15 \leq R_{L1eff} \leq 0.18$.

**3.** Optisches Doppelstapel-Datenspeichermedium nach einem der Ansprüche 1 oder 2, wobei $R_{L0}$ im Wesentlichen gleich $R_{L1eff}$ ist.

**4.** Optisches Doppelstapel-Datenspeichermedium nach einem der Ansprüche 1, 2 oder 3, wobei der erste Aufzeichnungsstapel eine erste reflektierende Schicht (5) mit einer Dicke $d_{L0M}$ und einem Absorptionskoeffizienten $k_{L0M}$ umfasst, und die Aufzeichnungsschicht L0 einen Absorptionskoeffizienten $k_{L0R}$ und eine Dicke $d_{L0R}$ aufweist und wo

$$(k_{L0R} * d_{L0R} + k_{L0M} * d_{L0M}) < 0.08 * \lambda .$$

**5.** Optisches Doppelstapel-Datenspeichermedium nach einem der Ansprüche 1, 2, 3 oder 4, wobei der zweite Aufzeichnungsstapel eine zweite reflektierende Schicht (2) umfasst, und die Aufzeichnungsschicht L1 einen Absorptionskoeffizienten $k_{L1R}$ aufweist, und wo die Eigenreflexion $R_{L1}$ des zweiten Aufzeichnungsstapels im Bereich 0.30 - 0.60 liegt und wo $0.075 < k_{L1R} < 0.25$.

**6.** Optisches Doppelstapel-Datenspeichermedium nach einem der Ansprüche 4 oder 5, wobei die erste reflektierende Schicht (5) eine Dicke $d_{L0M} \leq 16$ nm aufweist und hauptsächlich eine Schicht umfasst, die von Ag, Au oder Cu ausgewählt ist.

**7.** Optisches Doppelstapel-Datenspeichermedium nach Anspruch 6, wobei die erste reflektierende Schicht (5) eine Dicke von $d_{L0M} \leq 12$ nm aufweist.

**8.** Optisches Doppelstapel-Datenspeichermedium nach einem der Ansprüche 1 bis 7, wobei $k_{L0R} > 0.025$.

**9.** Optisches Doppelstapel-Datenspeichermedium nach Anspruch 8, wobei $k_{L0R} > 0.050$.

**10.** Optisches Doppelstapel-Datenspeichermedium nach einem der Ansprüche 1 bis 9, wobei eine Führungsrille (G) für L1 in der transparenten Abstandsschicht (4) bereitgestellt wird.

**11.** Optisches Doppelstapel-Datenspeichermedium nach einem der Ansprüche 1 bis 9, wobei eine Führungsrille (G) für L1 im Substrat (1) bereitgestellt wird.

**Revendications**

1. Support de stockage optique de données à double empilement (10) pour enregistrement à écriture unique en utilisant un faisceau de rayonnement focalisé (9) qui a une longueur d'onde λ d'environ 655 nm et pénètre par une face d'entrée (8) du support (10) pendant l'enregistrement, comprenant :

   - au moins un substrat (1, 7), sur un côté duquel sont présents:
   - un premier empilement d'enregistrement (6), dénommé L0, qui comprend une couche d'enregistrement du type à écriture unique L0, ledit premier empilement d'enregistrement L0 ayant une valeur de réflexion optique $R_{L0}$ et une valeur de transmission optique $T_{L0}$,
   - un deuxième empilement d'enregistrement (3) dénommé L1, qui comprend une couche d'enregistrement du type à écriture unique L1, ledit deuxième empilement d'enregistrement L1 ayant une valeur de réflexion optique effective $R_{L1eff}$,
   ledit premier empilement d'enregistrement étant présent en une position plus proche de la face d'entrée que le deuxième empilement d'enregistrement,
   - une couche d'espacement transparente (4) prise en sandwich entre les empilements d'enregistrement (3, 6),

   **caractérisée en ce que**

   $$0,12 \leq R_{L0} \leq 0,18 \text{ et } 0,12 \leq R_{L1eff} \leq 0,18$$

2. Support de stockage optique de données à double empilement selon la revendication 1, dans lequel

   $$0,15 \leq R_{L0} \leq 0,18 \text{ et } 0,15 \leq R_{L1eff} \leq 0,18$$

3. Support de stockage optique de données à double empilement selon l'une quelconque des revendications 1 ou 2, dans lequel $R_{L0}$ est essentiellement égal à $R_{L1eff}$.

4. Support de stockage optique de données à double empilement selon l'une quelconque des revendications 1, 2, 3, dans lequel le premier empilement d'enregistrement comprend une première couche réfléchissante (5) avec une épaisseur $d_{L0M}$ et un coefficient d'absorption $k_{L0M}$, et la couche d'enregistrement L0 a un coefficient d'absorption $k_{L0R}$ et une épaisseur $d_{L0R}$, avec

   $$(k_{L0R} * d_{L0R} + k_{L0M} * d_{L0M}) < 0,08 * \lambda.$$

5. Support de stockage optique de données à double empilement selon l'une quelconque des revendications 1, 2, 3 ou 4, dans lequel le deuxième empilement d'enregistrement comprend une deuxième couche réfléchissante (2) et la couche d'enregistrement L1 a un coefficient d'absorption $K_{L1R}$, et où la réflexion intrinsèque $R_{L1}$ du deuxième empilement d'enregistrement est dans la plage de 0,30 à 0,60, et où $0,075 < k_{1R} < 0,25$.

6. Support de stockage optique de données à double empilement selon l'une quelconque des revendications 4 ou 5, dans lequel la première couche réfléchissante (5) a une épaisseur $d_{L0M} \leq 16$ nm et comprend principalement un élément sélectionné parmi Ag, Au ou Cu.

7. Support de stockage optique de données à double empilement selon la revendication 6, dans lequel la première couche réfléchissante (5) a une épaisseur $d_{L0M} \leq 12$ nm.

8. Support de stockage optique de données à double empilement selon l'une quelconque des revendications 1 à 7, dans lequel $k_{L0R} > 0,025$.

9. Support de stockage optique de données à double empilement selon la revendication 8, dans lequel $k_{L0R} > 0,050$.

10. Support de stockage optique de données à double empilement selon l'une quelconque des revendications 1 à 9, dans lequel un sillon de guidage (G) pour L1 est disposé dans la couche d'espacement transparente (4).

11. Support de stockage optique de données à double empilement selon l'une quelconque des revendications 1 à 9, dans lequel un sillon de guidage (G) pour L1 est disposé dans le substrat (1).

$$R_{L0} \quad R_{L1}*T_{L0}^2$$

FIG.1

FIG.2

O = $R_{LO}$ = 0.07
□ = $R_{LO}$ = 0.09
× = $R_{LO}$ = 0.18

FIG.3

FIG.4

FIG.5

FIG.6

FIG.7

FIG.8-1

FIG.8-2

FIG.9

**FIG.10**

**FIG.11**

$n_R = 2.4$; $d_G = 155nm$; $d_W = 350 nm$

1: k=0.05, L =0.375
2: k=0.15, L =0.375
3: k=0.25, L =0.375
4: k=0.05, L =0.300
5: k=0.15, L =0.300
6: k=0.25, L =0.300

FIG.12